# FASCICULE DE BREVET EUROPEEN

(11) **EP 3 589 510 B1**
(45) Date de publication et mention de la délivrance du brevet: **20.01.2021**
(21) Numéro de dépôt: 18706788.9
(22) Date de dépôt: 02.02.2018
(51) Int. Cl.: B60K 6/448, B60K 6/52, B60K 17/356, B60W 10/02, B60W 10/11, B60W 20/40, B60K 6/387, B60W 20/20

(54) **DISPOSITIF DE CONTRÔLE DES COUPLAGES/DÉCOUPLAGES D'UNE MACHINE MOTRICE D'UN VÉHICULE LORS D'UN CHANGEMENT DE RAPPORT**
VORRICHTUNG ZUR STEUERUNG VON KOPPLUNGEN/ENTKOPPLUNGEN EINER ANTRIEBSMASCHINE EINES FAHRZEUGS WÄHREND EINER ÄNDERUNG DES ÜBERSETZUNGSVERHÄLTNISSES
DEVICE CONTROLLING COUPLINGS/UNCOUPLINGS OF A PRIME MOVER OF A VEHICLE DURING A CHANGE IN TRANSMISSION RATIO

(30) Priorité: 02.03.2017 FR 1751695
(43) Date de publication de la demande: 08.01.2020
(73) Titulaire: PSA Automobiles SA, 78300 Poissy (FR)
(72) Inventeur: MILHAU, Yohan, 78630 Orgeval (FR); ROCQ, Gaetan, 78125 La Boissière Ecole (FR); COZ, Emmanuel, 92190 Meudon (FR)
(86) Numéro de dépôt international: PCT/FR2018/050259
(87) Numéro de publication internationale: WO 2018/158516

(56) Documents cités:
- WO-A1-2016/001534
- FR-A1- 2 935 660
- FR-A1- 3 003 525
- FR-A1- 3 005 000

## Description

L'invention concerne les véhicules ayant une chaîne de transmission comportant au moins une machine motrice non-thermique et associée à des moyens de changement de rapport couplés à un train et intervenant dans les changements de rapport et une autre machine motrice non-thermique et couplée à un autre train.

On entend ici par « machine motrice » une machine non-thermique agencée de manière à fournir ou récupérer du couple pour déplacer un véhicule, soit seule soit en complément d'un éventuel moteur thermique. Il pourra par exemple s'agir d'une machine (ou moteur) électrique, d'une machine hydraulique, d'une machine pneumatique (ou à air comprimé), ou d'un volant d'inertie.

Comme le sait l'homme de l'art, certains véhicules, éventuellement de type automobile et éventuellement hybrides, comprennent une chaîne de transmission comportant une première machine motrice propre à être couplée à un premier train via des premiers moyens de couplage, et une seconde machine motrice propre à être couplée à un second train via des moyens de changement de rapport et intervenant lors des changements de rapport de ces derniers.

Par exemple, cette seconde machine motrice peut assurer le couplage entre les seconds moyens de couplage et l'arbre primaire des moyens de changement de rapport, ou bien entre le moteur thermique et les seconds moyens de couplage.

Les chaînes de transmission précitées sont généralement gérées par un calculateur de supervision qui comprend, ou est couplé, à un dispositif de contrôle chargé de lui proposer de coupler/découpler leur première machine motrice. On notera que tout type de couplage/découplage est ici concerné, et notamment ceux par crabot et par embrayage.

Une proposition de couplage de la première machine motrice est généralement destinée à minimiser la consommation de carburant par le moteur thermique, par exemple grâce à une récupération d'énergie électrique dans une phase de freinage, et/ou à augmenter les performances du véhicule, par exemple par adjonction au couple qui est produit par son moteur thermique du couple que peut produire cette première machine motrice lors d'une phase de roulage.

Les propositions de couplage/découplage sont habituellement prises en fonction d'informations qui sont relatives au véhicule considéré, comme par exemple l'enfoncement de la pédale d'accélérateur, l'enfoncement de la pédale de frein, la vitesse en cours du véhicule, l'inclinaison en cours du véhicule, et une contrainte d'utilisation de la première machine motrice et/ou du moteur thermique. Elles sont ensuite transmises au calculateur de supervision de la chaîne de transmission, afin qu'il décide de les suivre ou de les rejeter en fonction de ses propres contraintes, éventuellement temporaires.

Certaines de ces propositions de couplage/découplage peuvent conduire à un couplage permanent de la première machine motrice pendant une durée relativement longue, alors même que la vitesse du véhicule est stabilisée et donc que cette machine motrice n'est pas utilisée. Cela induit des pertes d'énergie par dissipation (typiquement plusieurs kilowatts à vitesse élevée) du fait du couple de perte de cette première machine motrice, et cela peut endommager cette dernière lorsqu'elle présente un régime maximal au-delà duquel un découplage est nécessaire. Par ailleurs, lorsque le mode de fonctionnement de type tout électrique (ou ZEV (« Zéro Emission Véhicule »)) est privilégié à basse vitesse, chaque proposition de découplage est alors rejetée lorsque la vitesse du véhicule est inférieure à un seuil (par exemple égal à 50 km/h).

Par ailleurs, dans les chaînes de transmission précitées, si l'on veut maximiser l'agrément et la continuité de couple aux roues, la seconde machine motrice est contrainte de fournir une forte puissance lors de chaque changement de rapport, et en particulier lors d'un changement d'un rapport engagé vers un rapport inférieur. En effet, dans ce cas, on doit synchroniser le régime en cours de l'arbre primaire des moyens de changement de rapport avec le régime cible du rapport cible qui est plus important que ce régime en cours, ce qui nécessite une importante puissance de décharge du moyen de stockage d'énergie (généralement une batterie rechargeable) du fait qu'elle doit alimenter en énergie la seconde machine motrice.

De même, la réalisation d'un changement d'état de couplage des premiers moyens de couplage peut également nécessiter une forte puissance fournie par le même moyen de stockage d'énergie que celui qui alimente les première et seconde machines motrices. Par exemple, lors d'un crabotage à haute vitesse, la synchronisation de la vitesse de la première machine motrice sur la vitesse cible peut nécessiter plusieurs dizaines de kilowatts.

Par conséquent, lorsque l'on doit réaliser un changement d'état de couplage des premiers moyens de couplage en même temps qu'un changement de rapport, la puissance disponible dans le moyen de stockage d'énergie peut être insuffisante, ce qui peut induire une dégradation de la qualité de réalisation du changement de rapport et/ou du changement d'état de couplage se traduisant par exemple par des chocs ou des à-coups.

On connait en outre les documents de brevet WO-A1-2016001534, FR-A1-300500 et FR-A1-3003525 divulguant le préambule de la revendication 1.

L'invention a donc notamment pour but d'améliorer la situation.

Elle propose notamment un dispositif de contrôle destiné à contrôler le couplage/découplage d'une première machine motrice non-thermique, via des premiers moyens de couplage, à un premier train d'un véhicule qui comprend également un second train et une seconde machine motrice non-thermique et propre à être couplée au second train via des moyens de changement de rapport et intervenant lors des changements de rapport de ces derniers.

Ce dispositif de contrôle se caractérise par le fait qu'il comprend des moyens de contrôle agencés, en cas de décision de changement de rapport nécessitant une intervention de la seconde machine motrice, pour interdire, au moins temporairement, un changement d'état de couplage des premiers moyens de couplage pendant ce changement de rapport lorsqu'au moins une condition prédéfinie, relative à un type choisi parmi un type du changement d'état de couplage et un type du changement de rapport décidé, est remplie.

Grâce à cette interdiction temporaire, sous condition, de réalisation d'un changement d'état de couplage pendant un changement de rapport, on est certain que la puissance, disponible dans les moyens de stockage d'énergie qui alimentent les première et seconde machines motrices, sera suffisante pour réaliser ce changement de rapport, puis pour réaliser ensuite ce changement d'état de couplage.

Le dispositif de contrôle selon l'invention peut comporter d'autres caractéristiques qui peuvent être prises séparément ou en combinaison, et notamment :
- ses moyens de contrôle peuvent être agencés pour interdire temporairement le changement d'état de couplage des premiers moyens de couplage pendant une durée inférieure à un seuil prédéfini ;
- ses moyens de contrôle peuvent être agencés pour interdire au moins temporairement le changement d'état de couplage des premiers moyens de couplage pendant le changement de rapport lorsqu'une condition prédéfinie relative au type du changement d'état de couplage et lorsqu'une condition prédéfinie relative au type du changement de rapport décidé, sont remplies ;
- le type du changement d'état de couplage peut être choisi parmi un changement d'un état découplé à un état couplé (des premiers moyens de couplage), et un changement d'un état couplé à un état découplé (des premiers moyens de couplage) ;
- le type du changement de rapport décidé peut être choisi parmi un changement d'un rapport engagé à un rapport supérieur, et un changement d'un rapport engagé à un rapport inférieur ;
- ses moyens de contrôle peuvent être agencés pour ne pas interdire temporairement un changement d'état de couplage pendant un changement de rapport, si ce changement d'état de couplage concerne un couplage/découplage sécuritaire ;
- ses moyens de contrôle peuvent être agencés pour interdire au moins temporairement le changement d'état de couplage lorsqu'en outre une condition prédéfinie, relative à un mode de fonctionnement en cours du véhicule, est remplie ;
- le mode de fonctionnement en cours du véhicule peut être choisi parmi une sélection d'un mode de roulage à quatre roues motrices, une sélection d'un mode de conduite sportive, et un placement dans au moins un état prédéfini d'un dispositif d'assistance à un conducteur du véhicule ;

L'invention propose également un véhicule, éventuellement de type automobile, et comprenant, d'une part, une chaîne de transmission comportant une première machine motrice non-thermique et propre à être couplée, via des premiers moyens de couplage, à un premier train, et une seconde machine motrice non-thermique et propre à être couplée à un second train via des moyens de changement de rapport et intervenant lors des changements de rapport de ces derniers, et, d'autre part, un dispositif de contrôle du type de celui présenté ci-avant.

Par exemple, les première et seconde machines motrices peuvent être choisies parmi des moteurs électriques, des machines hydrauliques, des machines pneumatiques et des volants d'inertie.

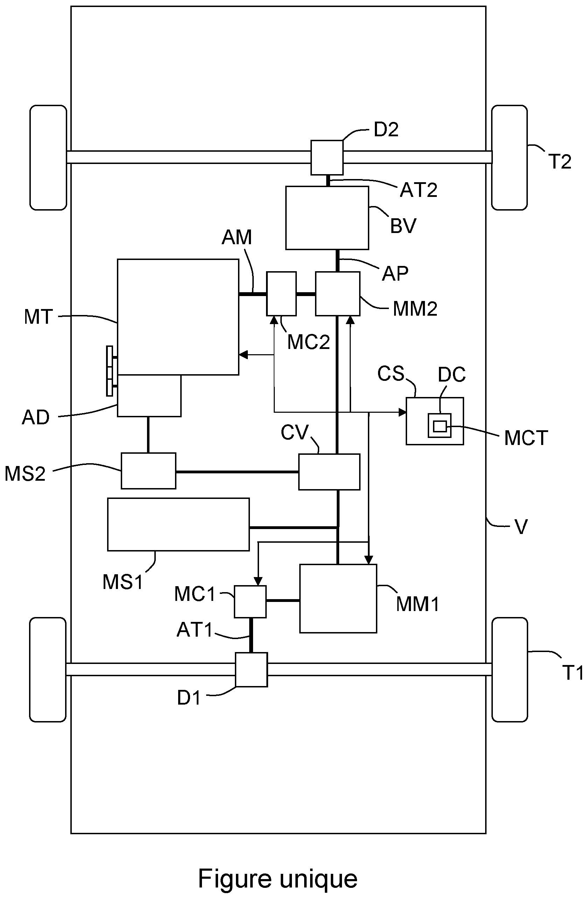

D'autres caractéristiques et avantages de l'invention apparaîtront à l'examen de la description détaillée ci-après, et du dessin annexé, sur lequel l'unique figure illustre schématiquement et fonctionnellement un véhicule hybride comprenant une chaîne de transmission et un calculateur de supervision équipé d'un dispositif de contrôle selon l'invention.

L'invention a notamment pour but de proposer un dispositif de contrôle DC destiné, d'une part, à équiper un véhicule V comprenant une chaîne de transmission comportant au moins des première MM1 et seconde MM2 machines motrices non-thermiques, et, d'autre part, à contrôler le couplage/découplage de cette première machine motrice MM1.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comprenant une chaîne de transmission comportant une première machine motrice propre à être couplée, via des premiers moyens de couplage, à un premier train, et une seconde machine motrice propre à être couplée à un second train via des moyens de changement de rapport et intervenant lors des changements de rapport de ces derniers. Par conséquent, l'invention concerne non seulement les véhicules terrestres, mais également les bateaux et les avions.

Il est rappelé que l'on entend ici par « machine motrice » une machine non-thermique agencée de manière à fournir ou récupérer du couple pour déplacer un véhicule, soit seule soit en complément d'un moteur thermique.

Par ailleurs, on entend ici par « moteur thermique » un moteur consommant du carburant ou des produits chimiques. Par conséquent, il pourra notamment s'agir d'un réacteur, d'un turboréacteur ou d'un moteur chimique.

D'autre part, on considère dans ce qui suit, à titre d'exemple non limitatif, que les première MM1 et seconde MM2 machines motrices sont de type électrique. Mais l'invention n'est pas limitée à ce type de machine motrice. Ainsi, elle concerne également et notamment les machines (ou moteurs) hydrauliques, les machines (ou moteurs) pneumatiques (ou à air comprimé), et les volants d'inertie.

On a schématiquement représenté sur l'unique figure un véhicule V comprenant une chaîne de transmission, un calculateur de supervision CS propre à superviser (ou gérer) le fonctionnement de la chaîne de transmission, et un dispositif de contrôle DC selon l'invention.

Dans ce qui suit, on considère, à titre d'exemple non limitatif, que le véhicule V est de type hybride. Sa chaîne de transmission comprend donc également un moteur thermique MT en complément de ses première MM1 et seconde MM2 machines motrices. Mais l'invention n'est pas limitée à ce type de véhicule.

La chaîne de transmission comprend donc ici, notamment, un moteur thermique MT, un arbre moteur AM, une première machine motrice MM1, des premiers moyens de couplage MC1, une seconde machine motrice MM2, des seconds moyens de couplage MC2, des moyens de changement de rapport BV, des premiers moyens de stockage d'énergie MS1 et des premier AT1 et second AT2 arbres de transmission.

Etant donné que l'on considère ici que les première MM1 et seconde MM2 machines motrices sont de type électrique, les premiers moyens de stockage d'énergie MS1 qui les alimentent toutes deux sont agencés pour stocker de l'énergie électrique, par exemple en basse tension (typiquement 220 V).

Le premier moyen de couplage MC1 est ici chargé de coupler/ découpler la première machine motrice MM1 au/du premier arbre de transmission AT1, sur ordre du calculateur de supervision CS, afin de communiquer du couple qu'elle produit et qui est défini par une consigne (de couple ou de régime), grâce à l'énergie stockée dans les premiers moyens de stockage MS1, au premier arbre de transmission AT1. Ce dernier (AT1) est couplé à un premier train T1 (ici de roues).

Par exemple, le premier train T1 est situé à l'arrière du véhicule V, et de préférence, et comme illustré, couplé au premier arbre de transmission AT1 via un premier différentiel (ici arrière) D1. Mais dans une variante ce premier train T1 pourrait être situé à l'avant du véhicule V.

Le premier moyen de couplage MC1 peut, par exemple, être un mécanisme à crabots ou un embrayage ou encore un convertisseur de couple hydraulique. Il peut prendre deux états de couplage : un premier (couplé) dans lequel il assure le couplage de la première machine motrice MM1 au premier arbre de transmission AT1 et un second (découplé) dans lequel il découple la première machine motrice MM1 du premier arbre de transmission AT1.

Le moteur thermique MT comprend un vilebrequin (non représenté) qui est solidarisé fixement à l'arbre moteur AM afin d'entraîner ce dernier (AM) en rotation. Ce moteur thermique MT est destiné à fournir du couple pour un second train T2 (ici de roues), via au moins les seconds moyens de couplage MC2 et les moyens de changement de rapport BV.

Par exemple, le second train T2 est situé à l'avant du véhicule V, et couplé à un second arbre de transmission AT2, de préférence, et comme illustré, via un second différentiel (ici avant) D2. Mais dans la variante précitée ce second train T2 pourrait être situé à l'arrière du véhicule V.

Les seconds moyens de couplage MC2 peuvent, par exemple, être agencés sous la forme d'un embrayage. Mais il pourrait également s'agir d'un convertisseur de couple ou d'un crabot.

Les moyens de changement de rapport BV peuvent, par exemple, être agencés sous la forme d'une boîte de vitesses. Ils comprennent un arbre primaire (ou d'entrée) AP destiné à recevoir du couple, et un arbre secondaire (ou de sortie) destiné à recevoir ce couple via l'arbre primaire AP afin de le communiquer au second arbre de transmission AT2 auquel il est couplé et qui est couplé indirectement à des roues (ici avant) du véhicule V via le second différentiel D2. Mais dans une variante de réalisation les moyens de changement de rapport BV pourraient, par exemple, comprendre au moins un train épicycloïdal comprenant un, deux ou trois synchronisateurs. Il est rappelé que les synchronisateurs permettent de solidariser deux éléments entre eux afin de fixer un couple et un régime sur deux des trois arbres d'un train épicycloïdal.

La seconde machine motrice MM2 est chargée d'intervenir lors des changements de rapport des moyens de changement de rapport BV.

Dans l'exemple qui est illustré non limitativement sur l'unique figure, la seconde machine motrice MM2 est couplée aux seconds moyens de couplage MC2 (ici un embrayage) et aux moyens de changement de rapport BV (ici une boîte de vitesses). Mais ils pourraient être installés en d'autres endroits de la chaîne de transmission, et par exemple entre le moteur thermique MT et les seconds moyens de couplage MC2 ou entre un démarreur ou un alterno-démarreur AD (décrit plus loin) et le moteur thermique MT, dès lors qu'ils interviennent lors de chaque changement de rapport.

Dans l'exemple qui est illustré non limitativement sur l'unique figure, les seconds moyens de couplage MC2 comprennent un volant moteur solidarisé fixement à l'arbre moteur AM et un disque d'embrayage solidarisé fixement à un arbre d'entrée de la seconde machine motrice MM2, laquelle est par ailleurs couplée à l'arbre primaire AP des moyens de changement de rapport BV. On notera que ces derniers (BV) peuvent être automatisés ou non.

On notera, comme illustré non limitativement sur l'unique figure, que la chaîne de transmission peut également comprendre un démarreur ou un alterno-démarreur AD couplé au moteur thermique MT et chargé de lancer ce dernier (MT) afin de lui permettre de démarrer. Ce lancement se fait grâce à de l'énergie électrique qui est, par exemple et comme illustré non limitativement, stockée dans des seconds moyens de stockage MS2.

Ces seconds moyens de stockage MS2 peuvent être agencés sous la forme d'une batterie très basse tension (par exemple 12 V, 24 V ou 48V). Cette dernière (MS2) peut, par exemple, alimenter un réseau de bord auquel sont connectés des équipements électriques du véhicule V. On notera que les seconds moyens de stockage MS2 peuvent, comme illustré non limitativement, être couplés aux premiers moyens de stockage d'énergie MS1 et à la première machine motrice MM1 via un convertisseur CV de type DC/DC, afin de pouvoir être rechargés.

Les fonctionnements du moteur thermique MT, des première MM1 et seconde MM2 machines motrices, et des premiers MC1 et seconds MC2 moyens de couplage peuvent être contrôlés par le calculateur de supervision CS. Ce dernier (CS) est par exemple capable de faire fonctionner le véhicule V dans au moins trois modes de roulage différents. Dans un premier mode dit « thermique » seul le moteur thermique MT est utilisé pour déplacer le véhicule V. Dans un deuxième mode dit « Zéro Emission Véhicule » (ou ZEV)) la première machine motrice MM1 et/ou la seconde machine motrice MM2 est/sont utilisée(s) pour déplacer le véhicule V. Dans un troisième mode dit « hybride » la première machine motrice MM1 et/ou la seconde machine motrice MM2 est/sont utilisée(s) en complément du moteur thermique MT pour déplacer le véhicule V.

Comme indiqué précédemment, l'invention propose un dispositif de contrôle DC destiné à contrôler le couplage/découplage de la première machine motrice MM1 au sein du véhicule V.

Dans l'exemple non limitatif illustré sur l'unique figure, le dispositif de contrôle DC fait partie du calculateur de supervision CS. Mais cela n'est pas obligatoire. Ce dispositif de contrôle DC pourrait en effet être un équipement couplé au calculateur de supervision CS, directement ou indirectement. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Un dispositif de contrôle DC, selon l'invention, comprend des moyens de contrôle MCT qui sont chargés d'intervenir chaque fois qu'un changement d'état de couplage des premiers moyens de couplage MC1 a été décidé, par exemple par le calculateur de supervision CS.

Chaque fois qu'une telle situation survient pendant un changement de rapport, les moyens de contrôle MCT sont agencés pour interdire, au moins temporairement, le changement d'état de couplage des premiers moyens de couplage MC1 pendant ce changement de rapport lorsqu'au moins une condition prédéfinie, relative à un type qui est choisi parmi un type du changement d'état de couplage et un type du changement de rapport décidé, est remplie.

Cette interdiction temporaire de réalisation d'un changement d'état de couplage, lorsqu'au moins une condition particulière précitée est remplie (ou satisfaite), permet de mettre à la disposition des seconds moyens de couplage MC2 la puissance qui est disponible dans les premiers moyens de stockage d'énergie MS1 (voire dans les seconds moyens de stockage d'énergie MS2) et qui est suffisante pour qu'ils assurent leur intervention relative au changement de rapport. Ensuite, on pourra mettre à la disposition des premiers moyens de couplage MC1 l'énergie qui est encore disponible dans le premier moyen de stockage d'énergie MS1 pour qu'ils réalisent le changement d'état de couplage prévu.

Par exemple, et de préférence, les moyens de contrôle MCT peuvent être agencés pour interdire temporairement le changement d'état de couplage des premiers moyens de couplage MC1 pendant une durée qui est inférieure à un seuil prédéfini. Ce seuil peut, par exemple, être compris entre 500 ms et 2 s.

En présence d'une telle option, les moyens de contrôle MCT déclenchent une temporisation d'une durée égale au seuil prédéfini dès qu'un changement d'état de couplage est décidé. Puis, dans le même temps ou juste après ce déclenchement, ils déterminent si un changement de rapport est en cours de réalisation ou vient d'être décidé. Dans la négative, les moyens de contrôle MCT autorisent le changement d'état de couplage. En revanche, dans l'affirmative, les moyens de contrôle MCT attendent que le changement de rapport soit terminé en surveillant le temps écoulé depuis le déclenchement de la temporisation. Si le changement de rapport se termine avant l'expiration de la temporisation ou si la temporisation expire avant la fin du changement de rapport, alors les moyens de contrôle MCT autorisent le changement d'état de couplage. Cette option est destinée à empêcher trop longtemps la réalisation d'un changement d'état de couplage, du fait d'un problème lors du changement de rapport (qui s'éternise).

Egalement par exemple, et de préférence, les moyens de contrôle MCT peuvent être agencés pour interdire au moins temporairement un changement d'état de couplage des premiers moyens de couplage MC1 pendant un changement de rapport lorsqu'une condition prédéfinie relative au type du changement d'état de couplage et lorsqu'une condition prédéfinie relative au type du changement de rapport décidé, sont remplies (ou satisfaites). En d'autres termes, lorsque cette option est mise en œuvre, il faut qu'au moins deux conditions portant sur le type du changement d'état de couplage et le type du changement de rapport décidé soient simultanément satisfaites pour que le changement d'état de couplage soit au moins temporairement interdit par les moyens de contrôle MCT.

On notera que le type du changement d'état de couplage peut, par exemple, être choisi selon les besoins applicatifs parmi un changement d'un état découplé à un état couplé des premiers moyens de couplage MC1, et un changement d'un état couplé à un état découplé des premiers moyens de couplage MC1.

On notera également que le type du changement de rapport décidé peut, par exemple, être choisi selon les besoins applicatifs parmi un changement d'un rapport engagé à un rapport supérieur, et un changement d'un rapport engagé à un rapport inférieur.

A titre d'exemple non limitatif, les moyens de contrôle MCT peuvent interdire au moins temporairement un changement d'un état découplé à un état couplé des premiers moyens de couplage MC1 pendant un changement de rapport descendant, et un changement d'un état couplé à un état découplé des premiers moyens de couplage MC1 pendant un changement de rapport montant.

On notera également qu'en option les moyens de contrôle MCT peuvent être agencés pour ne pas interdire temporairement un changement d'état de couplage pendant un changement de rapport, si ce changement d'état de couplage concerne un couplage/découplage sécuritaire. A titre d'exemple, un décrabotage à 130 km/h est un découplage sécuritaire destiné à protéger contre un surrégime de machine motrice. Dans ce cas, le dispositif de contrôle DC applique un figeage de l'état de couplage seulement lorsque le couplage/découplage est non sécuritaire, et inversement autorise le changement d'état de couplage lorsque le couplage/découplage est sécuritaire.

On notera également qu'en option (variante ou complément de la précédente option) les moyens de contrôle MCT peuvent être agencés pour interdire au moins temporairement un changement d'état de couplage lorsqu'en outre une condition prédéfinie, relative à un mode de fonctionnement en cours du véhicule V, est remplie (ou satisfaite).

Par exemple, le mode de fonctionnement en cours du véhicule V peut être choisi parmi une sélection d'un mode de roulage à quatre roues motrices, une sélection d'un mode de conduite sportive, et un placement dans au moins un état prédéfini d'un dispositif d'assistance à un conducteur du véhicule V (éventuellement de type ADAS (« Advanced Driver Assistance System »)). Cette option est par exemple destinée à empêcher que l'on passe en mode de roulage à deux roues motrices alors même que l'on a besoin de maintenir un mode de roulage à quatre roues motrices, ou bien à empêcher que l'on passe en mode de conduite automatique ou économique alors même que le conducteur a sélectionné le mode de conduite sportive.

On notera également qu'en option (variante ou complément de la précédente option) les moyens de contrôle MCT peuvent être agencés pour interdire au moins temporairement le changement d'état de couplage lorsqu'en outre le véhicule V circule à une altitude supérieure à un seuil prédéfini. Ce seuil prédéfini dépend du véhicule et plus précisément au moins de sa puissance motrice. Cette option est par exemple destinée à empêcher un découplage de la première machine motrice MM1 du premier train T1, qui aboutirait à une perte de motricité et une augmentation notable de la perte de puissance déjà induite par l'altitude.

L'invention offre plusieurs avantages, parmi lesquels :
- une optimisation de la puissance fournie par les premiers moyens de stockage d'énergie pour des besoins de transitoire de couplage/ découplage,
- une augmentation de la qualité de réalisation des transitoires de couplage/ découplage, et donc une amélioration de l'agrément global (conduite et confort) tout en respectant les besoins sécuritaires, sans pénalité de consommation.

## Revendications

1. Dispositif (DC) de contrôle du couplage/découplage d'une première machine motrice (MM1) non-thermique, via des premiers moyens de couplage (MC1), à un premier train (T1) d'un véhicule (V) comprenant en outre un second train (T2) et une seconde machine motrice (MM2) non-thermique et propre à être couplée audit second train (T2) via des moyens de changement de rapport (BV) et intervenant lors des changements de rapport de ces derniers (BV), **caractérisé en ce qu'**il comprend des moyens de contrôle (MCT) agencés, en cas de décision de changement de rapport nécessitant une intervention de ladite seconde machine motrice (MM2), pour interdire au moins temporairement un changement d'état de couplage desdits premiers moyens de couplage (MC1) pendant ledit changement de rapport lorsqu'au moins une condition prédéfinie, relative à un type choisi parmi un type dudit changement d'état de couplage et un type dudit changement de rapport décidé, est remplie.

2. Dispositif selon la revendication 1, **caractérisé en ce que** lesdits moyens de contrôle (MCT) sont agencés pour interdire temporairement ledit changement d'état de couplage des premiers moyens de couplage (MC1) pendant une durée inférieure à un seuil prédéfini.

3. Dispositif selon l'une des revendications 1 et 2, **caractérisé en ce que** lesdits moyens de contrôle (MCT) sont agencés pour interdire au moins temporairement ledit changement d'état de couplage des premiers moyens de couplage (MC1) pendant ledit changement de rapport lorsqu'une condition prédéfinie relative au type dudit changement d'état de couplage et lorsqu'une condition prédéfinie relative au type dudit changement de rapport décidé, sont remplies.

4. Dispositif selon l'une des revendications 1 à 3, **caractérisé en ce que** ledit type du changement d'état de couplage est choisi parmi un changement d'un état découplé à un état couplé, et un changement d'un état couplé à un état découplé.

5. Dispositif selon l'une des revendications 1 à 4, **caractérisé en ce que** ledit type du changement de rapport décidé est choisi parmi un changement d'un rapport engagé à un rapport supérieur, et un changement d'un rapport engagé à un rapport inférieur.

6. Dispositif selon l'une des revendications 1 à 5, **caractérisé en ce que** lesdits moyens de contrôle (MCT) sont agencés pour ne pas interdire temporairement un changement d'état de couplage pendant un changement de rapport, si ce changement d'état de couplage concerne un couplage/découplage sécuritaire.

7. Dispositif selon l'une des revendications 1 à 6, **caractérisé en ce que** lesdits moyens de contrôle (MCT) sont agencés pour interdire au moins temporairement ledit changement d'état de couplage lorsqu'en outre une condition prédéfinie, relative à un mode de fonctionnement en cours dudit véhicule (V), est remplie.

8. Dispositif selon la revendication 7, **caractérisé en ce que** ledit mode de fonctionnement en cours du véhicule (V) est choisi parmi une sélection d'un mode de roulage à quatre roues motrices, une sélection d'un mode de conduite sportif, et un placement dans au moins un état prédéfini d'un dispositif d'assistance à un conducteur dudit véhicule (V).

9. Véhicule (V) comprenant une chaîne de transmission comportant une première machine motrice (MM1) non-thermique et propre à être couplée à un premier train (T1) via des premiers moyens de couplage (MC1), et une seconde machine motrice (MM2) non-thermique et propre à être couplée à un second train (T2) via des moyens de changement de rapport (BV) et intervenant lors des changements de rapport de ces derniers (BV), **caractérisé en ce qu'**il comprend en outre un dispositif de contrôle (DC) selon l'une des revendications 1 à 8.

10. Véhicule selon la revendication 9, **caractérisé en ce que** lesdites première (MM1) et seconde (MM2) machines motrices sont choisies parmi des moteurs électriques, des machines hydrauliques, des machines pneumatiques et des volants d'inertie.

## Patentansprüche

1. Vorrichtung (DC) Steuerung des Kopplungs / Abkuppeln eines ersten Antriebsmaschine (MM1) nicht-thermische , über erste Kopplungsmittel (MC1), eine erste Bahn (T1) eines Fahrzeugs (V) ferner umfassend einen zweiten Zug (T2) und eine zweite nichtthermische Antriebsmaschine (MM2) und geeignet, um über Gangwechselmittel (BV) an den zweiten Zug (T2) gekoppelt zu werden und bei Gangwechseln des letzteren (BV) einzugreifen, **dadurch gekennzeichnet, dass** er Steuermittel (MCT) umfasst, die angeordnet sind, im Falle einer Gangwechselentscheidung, die ein Eingreifen der zweiten Antriebsmaschine (MM2) erfordert, um zumindest vorübergehend eine Änderung des Kopplungszustands der ersten Kopplungseinrichtung (MC1) während des Gangwechsels zu verhindern, wenn mindestens eine Eine vordefinierte Bedingung, die sich auf einen Typ bezieht, der aus einem Typ der Änderung des Kopplungszustands und einem Typ der entschiedenen Änderung des Verhältnisses ausgewählt ist, ist erfüllt.

2. Vorrichtung nach Anspruch 1, **dadurch gekennzeichnet, dass** die Steuermittel (MCT) so angeordnet sind, dass sie die Änderung des Kopplungszustands der ersten Kopplungsmittel (MC1) vorübergehend für einen Zeitraum von weniger als einem vordefinierten Schwellenwert verbieten.

3. Vorrichtung nach einem der Ansprüche 1 und 2, **dadurch gekennzeichnet, dass** die Steuermittel (MCT) so angeordnet sind, dass sie die Änderung des Kopplungszustands der ersten Kopplungsmittel (MC1) während der Änderung des Verhältnisses zumindest vorübergehend verhindern, wenn eine vordefinierte Bedingung in Bezug auf die Art der Änderung des Kopplungszustands und wenn eine vordefinierte Bedingung in Bezug auf die Art der entschiedenen Änderung des Verhältnisses erfüllt ist.

4. Vorrichtung nach einem der Ansprüche 1 bis 3, die **dadurch gekennzeichnet ist, dass** die Art der Änderung des Kopplungszustands aus einer Änderung von einem entkoppelten Zustand in einen gekoppelten Zustand und einer Änderung von einem gekoppelten Zustand in einen gekoppelten Zustand ausgewählt wird. entkoppelt.

5. Vorrichtung nach einem der Ansprüche 1 bis 4, **dadurch gekennzeichnet, dass** der Typ des entschiedenen Gangwechsels aus einem Wechsel von einem eingelegten Gang in einen höheren Gang und einem Wechsel von einem eingelegten Gang in einen niedrigeren Gang ausgewählt ist.

6. Vorrichtung nach einem der Ansprüche 1 bis 5, **gekennzeichnet dadurch, dass** die Steuermittel (MCT) so angeordnet sind, dass eine Änderung des Kupplungszustands während eines Gangwechsels nicht vorübergehend verhindert wird, wenn diese Änderung des Kupplungszustands erfolgt betrifft die sichere Kopplung / Entkopplung.

7. Vorrichtung nach einem der Ansprüche 1 bis 6, die **dadurch gekennzeichnet ist, dass** die Steuermittel (MCT) so angeordnet sind, dass sie die Änderung des Kopplungszustands zumindest vorübergehend verbieten, wenn zusätzlich ein vordefinierter Zustand in Bezug auf einen Betriebsmodus vorliegt während des Fahrzeugs (V) erfüllt ist.

8. Vorrichtung nach Anspruch 7, **dadurch gekennzeichnet, dass** der aktuelle Betriebsmodus des Fahrzeugs (V) aus einer Auswahl eines Allradantriebsmodus, einer Auswahl eines Sportfahrmodus und einer Platzierung ausgewählt ist in mindestens einem vordefinierten Zustand einer Vorrichtung zur Unterstützung eines Fahrers des Fahrzeugs (V).

9. Fahrzeug (V) mit einer Antriebskette, die eine erste Antriebsmaschine mit (MM1) nicht-thermische und angepasst an einen ersten Zug (T1) über eine erste Kopplungseinrichtung gekoppelt zu werden (MC1) und eine zweite Antriebsmaschine (MM2) nicht thermisch und geeignet, um über Gangwechselmittel (BV) an einen zweiten Zug (T2) gekoppelt zu werden und beim Gangwechsel (BV) einzugreifen, **dadurch gekennzeichnet, dass** er ferner eine Vorrichtung umfasst Kontrolle (DC) nach einem der Ansprüche 1 bis 8.

10. Fahrzeug nach Anspruch 9, **dadurch gekennzeichnet, dass** die ersten (MM1) und zweite (MM 2) Maschinen s motive s s IS t
ausgewählt s von Motors Elektro, der Motors hydraulische, pneumatische Maschinen und Schwungrad 'Trägheit.

## Claims

1. Device (DC) for controlling the coupling/ decoupling of a first prime mover (MM1) non-thermal, via first coupling means (MC1), a first train (T1) of a vehicle (V) further comprising a second train (T2) and a second non-thermal drive machine (MM2) and suitable for being coupled to said second train (T2) via gear change means (BV) and intervening during gear changes of the latter (BV), **characterized in that** it comprises control means (MCT) arranged, in the event of a gear change decision requiring intervention by said second prime mover (MM2), to at least temporarily prevent a change in coupling state of said first coupling means (MC1) during said gear change when at least one predefined condition, relating to a type chosen from among a type of said change in coupling state and a type of said decided change in ratio, is fulfilled.

2. Device according to Claim 1, **characterized in that** the said control means (MCT) are arranged to temporarily prohibit the said change of coupling state of the first coupling means (MC1) for a period less than a predefined threshold.

3. Device according to one of Claims 1 and 2, **characterized in that** said control means (MCT) are arranged to at least temporarily prevent said change of coupling state of the first coupling means (MC1) during said change of ratio when 'a predefined condition relating to the type of said change in coupling state and when a predefined condition relating to the type of said decided change in ratio are fulfilled.

4. Device according to one of claims 1 to 3, **characterized in that** said type of coupling state change is chosen from among a change from a decoupled state to a coupled state, and a change from a coupled state to a coupled state. decoupled.

5. Device according to one of Claims 1 to 4, **characterized in that** the said type of the decided gear change is chosen from among a change from a gear engaged to a higher gear, and a change from a gear engaged to a lower gear.

6. Device according to one of claims 1 to 5, **characterized in that** said control means (MCT) are arranged so as not to temporarily prohibit a change of coupling state during a change of gear, if this change of coupling state concerns safe coupling / decoupling.

7. Device according to one of claims 1 to 6, **characterized in that** said control means (MCT) are arranged to at least temporarily prohibit said change of coupling state when, in addition, a predefined condition relating to an operating mode during said vehicle (V), is fulfilled.

8. Device according to claim 7, **characterized in that** said current operating mode of the vehicle (V) is chosen from a selection of a four-wheel drive driving mode, a selection of a sport driving mode, and a placement in at least one predefined state of a device for assisting a driver of said vehicle (V).

9. Vehicle (V) comprising a drive chain having a first prime mover (MM1) non-thermal and adapted to be coupled to a first train (T1) via first coupling means (MC1) and a second prime mover (MM2) non-thermal and suitable for being coupled to a second train (T2) via gear change means (BV) and intervening when the gear changes (BV), **characterized in that** it further comprises a device control (DC) according to one of claims 1 to 8.

10. Vehicle according to claim 9, **characterized in that** said first (MM1) and second (MM2) driving machines are chosen from electric motors, hydraulic machines, pneumatic machines and flywheels.
